# EUROPÄISCHE PATENTANMELDUNG

(11) **EP 0 667 303 A1**
(43) Veröffentlichungstag der Anmeldung: **16.08.1995**
(21) Anmeldenummer: 95810028.1
(22) Anmeldetag: 16.01.1995
(51) Int. Cl.: B65D 77/20, B32B 7/06

(54) **Sicherheits- oder Originalitätsverschluss**

(30) Priorität: 25.01.1994 CH 217/94; 15.02.1994 CH 441/94
(71) Anmelder: Alusuisse-Lonza Services AG, CH-8212 Neuhausen am Rheinfall (CH)
(72) Erfinder: Roncoroni, Joachim, D-78315 Radolfzell (DE); Rothschink, Andreas, D-78464 Konstanz (DE)

(57) **Zusammenfassung**

Sicherheits- oder Originalitätsverschluss für Entnahmeöffnungen von Verpackungen in Form eines Mehrschichtverbundes. Der Mehrschichtverbund enthält eine erste und eine zweite Haftschicht, wobei die erste und die zweite Haftschicht aneinander anliegen. Die Schichten haften aber kleben nicht aneinander und können voneinander getrennt werden. Neben den Haftschichten enthalten die Mehrschichtverbunde zweckmässig eine oder zwei Trägerschichten. Mit solchen Mehrschichtverbunden können beispielsweise Kunststoffblisterverpackungen verschlossen werden, welche nicht durch blosses Durchstossen des Packungsinhaltes durch den Deckel hindurch geöffnet werden können, sondern zuerst eine Sicherheitsschicht über die beiden Haftschichten abgezogen werden muss, oder es können Behälter mit einem Originalitätsverschluss und einem verbleibenden Wiederverschluss erzeugt werden.

## Beschreibung

Vorliegende Erfindung betrifft einen Sicherheits- oder Originalitätsverschluss für Entnahmeöffnungen von Verpackungen in Form eines Mehrschichtverbundes.

Es ist bekannt, Entnahmeöffnungen von Verpackungen mit einem Deckel zu überschliessen. Solche Verpackungen können beispielsweise Behälter, wie Flaschen, Gläser, Töpfe, Becher usw. sein oder aber auch Bodenteile mit einer Mehrzahl von Vertiefungen, Näpfchen oder dergleichen. Letztere Verpackungsformen sind insbesondere als sogenannte Blisterpackungen im Pharmaziebereich bekannt. Insbesondere im Lebensmittel- und Pharmaziebereich besteht das Bedürfnis, die Verpackung dichtend zu verschliessen und sicherzustellen, dass es für den Erstverbraucher oder Käufer erkennbar ist, dass die Verpackung seit dem Verlassen der Verpackungsstelle nicht geöffnet worden ist. Dies stellt einen sogenannten Originalitätsverschluss dar. Erst durch Brechen einer Siegelschicht kann der Behälter geöffnet und dessen Inhalt entnommen werden. Ein Wiederverschliessen des Behälters kann vorgesehen werden, wobei dann dieser Originalitätsverschluss selbstverständlich nicht mehr wirksam ist. Ein solcher Originalitätsverschluss kann gleichzeitig auch einen Sicherheitsverschluss darstellen, indem es beispielsweise unbefugten Händen verwehrt ist, an den Inhalt der Verpackung zu gelangen. Solche Verschlüsse können beispielsweise vorgesehen werden an pharmazeutischen Produkten. Neben dem Nachweis des Originalitätsverschlusses ist es dort sehr wichtig, dass Kinder nicht an den Inhalt der Packung gelangen können. In der Regel werden Blisterpackungen mit einem aluminiumfolienhaltigen Deckelmaterial verschlossen und das Deckelmaterial aufgesiegelt. Durch Durchdrücken einer Tablette von der Behälterseite her durch den Deckel platzt die Aluminiumfolie auf und gibt den Inhalt frei. Diese Manipulation kann auch von Kindern leicht durchgeführt werden und die Gefahr des ungewollten Zugriffs und Verschluckens von pharmazeutischen Produkten bei Kindern ist nicht auszuschliessen. Deshalb besteht das Bedürfnis, mit dem Originalitätsverschluss, welcher z.B. eine versiegelte Aluminiumfolie darstellt, auch einen Sicherheitsverschluss an beispielsweise Blisterpackungen anzubringen. Entsprechend kann ein solcher Sicherheitsverschluss auch an anderen Packungen vorgesehen werden, deren Inhalt vor Kinderhänden geschützt werden muss.

Aufgabe vorliegender Erfindung ist es, einen Sicherheits- oder Originalitätsverschluss zu beschreiben, der es ermöglicht, an der Fabrikationsrespektive Abfüllstätte eine Verpackung derart zu verschliessen, dass beim ersten Öffnen der Verpackung dem Verbraucher angezeigt wird, dass die Verpackung bis anhin nicht mehr geöffnet worden ist, und die sicherstellt, dass die Unversehrtheit des Originalitätsverschlusses auch über längere Zeiträume und unter klimatisch schwierigen Bedingungen stets gewährleistet ist.

Erfindungsgemäss wird das durch einen Verschluss erreicht, enthaltend eine erste Haftschicht und eine zweite Haftschicht, wobei die erste und die zweite Haftschicht aneinander anliegen.

Die beiden Haftschichten liegen -- wie der Begriff ausdrückt -- haftend aber nicht klebend aneinander an, d.h. die beiden Schichten können unter Kraftaufwand voneinander getrennt werden, ohne dass eine der beiden Schichten in sich einen Kohäsionsbruch erleidet, respektive einreisst oder durchreisst.

Zweckmässig liegen die erste und die zweite Haftschicht vollflächig aneinander an.

In einer bevorzugten Ausführungsform nach vorliegender Erfindung enthält der Sicherheits- oder Originalitätsverschluss eine erste Trägerschicht und auf der ersten Trägerschicht eine erste Haftschicht und anliegend an die erste Haftschicht eine zweite Haftschicht. Anstelle der ersten Trägerschicht auf der ersten Haftschicht kann die zweite Haftschicht auf einer Trägerschicht angebracht sein. Es kann auch auf der ersten Trägerschicht eine erste Haftschicht, anliegend an die erste Haftschicht eine zweite Haftschicht und auf der zweiten Haftschicht eine zweite Trägerschicht angebracht sein. Die Haftschichten und die Trägerschichten sind insbesondere derart miteinander verbunden, dass die Verbindung zwischen der Träger- und der Haftschicht jeweils stärker ist als die Haftung zwischen der ersten und der zweiten Haftschicht. Die Träger- und die Haftschichten sind insbesondere trennfest miteinander verbunden. Um eine starke Haftung zwischen den Trägerschichten und den jeweiligen Haftschichten zu erzielen, wird vorteilhaft ein Kaschierkleber angewendet. Beispiele von Trägerschichten sind beispielsweise Folien aus thermoplastischen Kunststoffen, wie aus Polyestern, Polyamiden, Polyolefinen oder Polyvinylchloriden oder Laminate, Verbunde oder Schichtstoffe enthaltend solche thermoplastischen Kunststoffe. Andere Trägerschichten sind Metallfolien, wie Aluminiumfolien. Die Trägerschichten können auch Verbunde verschiedener Materialien darstellen, wie beispielsweise Verbunde, enthaltend Folien aus thermoplastischen Kunststoffen oder Verbunde, enthaltend Folien aus thermoplastischen Kunststoffen und Papier oder Verbunde, enthaltend Metallfolien, wie Aluminiumfolien, und Folien aus thermoplastischen Kunststoffen oder Verbunde, enthaltend Metallfolien, wie Aluminiumfolien, Karton, Wellkarton oder Schaumstoffe aus organischen Materialien. Die äussersten Schichten oder wenigstens eine der beiden äussersten Schichten können eine Siegelschicht enthalten.

Typische Beispiele für Trägerschichten sind Folien aus thermoplastischem Kunststoff und mittels eines Kaschierklebers darauf angebracht eine Papierschicht. Dies kann eine erste Trägerschicht für den Originalitätsverschluss darstellen, während die zweite Trägerschicht beispielsweise eine Aluminiumfolie sein kann, die auf der zweiten Haftschicht abgewandten Seite einen Thermolack oder eine andere Siegelschicht, wie eine Siegelfolie trägt. Auf der Papierschicht kann beispielsweise ein Druck angebracht sein, und der Druck kann seinerseits durch einen Klarlack geschützt werden. Eine andere bevorzugte Ausführungsform eines Sicherheits- oder Originalitätsverschlusses kann eine erste Trägerschicht in Form einer Aluminiumfolie und darauf, beispielsweise durch einen Kaschierkleber verbunden eine Schicht aus Karton, Wellkarton oder Polyethylenschaum aufweisen und kann eine zweite Trägerschicht aus Aluminiumfolie und darauf, mittels eines Kaschierklebers aufkaschiert, eine Schicht eines Ionomerharzes oder eines Pergaminpapiers enthalten.

Als Folien, Laminate, Verbunde und Schichtstoffe oder Teile davon können thermoplastische Kunststoffe, beispielsweise Thermoplaste auf Olefin-Basis, auf Ester-Basis, auf Polyamid-Basis, auf Styrol-Basis oder halogenhaltige Kunststoffe oder geeignete Gemische davon, verwendet werden.

Beispiele für Thermoplaste auf Olefin-Basis sind Polyolefine, wie Polyethylen, wie Polyethylen hoher Dichte (HDPE, Dichte grösser als 0,944 g/cm³), Polyethylen mittlerer Dichte (MDPE, Dichte 0,926-0,940 g/cm³), lineares Polyethylen mittlerer Dichte (LMDPE, Dichte 0,926-0,940 g/cm³), Polyethylen niedriger Dichte LDPE, Dichte 0,910-0,925 g/cm³) und lineares Polyethylen niedriger Dichte (LLDPE, Dichte 0,916-0,925 g/cm³), Polypropylen, isotaktisches oder ataktisches Polypropylen, kristallines oder amorphes Polypropylen oder Gemische davon, Poly-1-buten, Poly-3-methylbuten, Poly-4-methylpenten und Copolymere oder Coextrudate davon und Ionomerharze, wie z.B. von Polyethylen mit Vinylacetat, Acrylsäure, z.B. Ionomerharze, wie Copolymerisate von Ethylen mit etwa 11 % Acrylsäure, Methacrylsäure, Acrylestern, Tetra-fluorethylen oder Polypropylen, sowie statistische Copolymere, Block-Copolymere oder Olefinpolymer-Elastomer-Mischungen. Bevorzugt sind Polyethylene und Polypropylene.

Thermoplaste auf Ester-Basis sind beispielsweise Polyalkylenterephthalate oder Polyalkylenisophthalate mit Alkylengruppen oder -resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalat), Polydecamethylenterephthalat, Poly-1,4-cyclohexyldimethylolterephthalat oder Polyethylen-2,6-naphthalen-dicarboxylat oder Polyalkylenterephthalat- und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe.

Zweckmässig sind die Thermoplaste auf Ester-Basis Polylalkylenterephthalate mit Alkylengruppen oder -resten mit 2 bis 10 Kohlenstoffatomen und Polylakylenterephthalate, mit Alkylengruppen oder -resten mit 2 bis 10 Kohlenstoffatomen, die durch ein oder zwei -0- unterbrochen sind.

Bevorzugt sind als Thermoplaste auf Ester-Basis Polyalkylenterephthalate mit Alkylengruppen oder -resten mit 2 bis 4 Kohlenstoffatomen und ganz besonders bevorzugt sind Polyethylenterephthalate.

Zu den Thermoplasten auf Amid-Basis gehören beispielsweise Polyamid 6, eine Homopolymerisat aus ε-Caprolactam (Polycaprolactan); Polyamid 11, ein Polykondensat aus 11-Aminoundecansäure (Poly-11-aminoundecanamid); Polyamid 12, ein Homopolymerisat und ω-Laurinlactam (Polylaurinlactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamthylensebacamid); Polyamid 6,12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), sowie Gemische davon.

Beispiele von Thermoplasten auf Basis von Styrolen sind Polystyrol, Co- und Terpolymersate davon, Copolymerisate mit Acrylnitril (SAN), Copolymerisate mit Butadien (SB) und Terpolymerisate, die Synthesekautschuke und Acrylnitril enthalten (ABS).

Zweckmässige Thermoplaste auf Styrol-Basis sind Polystyrol und Copolymere aus Styrol und Butadien. Derartige Copolymere aus Styrol und Butadien können beispielsweise einen Styrolanteil von 70 bis 90 Mol-% und zweckmässig von 75 bis 85 Mol-% aufweisen.

Eine nicht abschliessende Aufzählung von halogenhaltigen Kunststoffen beinhaltet beispielsweise die Polymere des Vinylchlorids und Vinylkunststoffe enthaltend Vinylchlorideinheiten in deren Struktur, z.B. Copolymere des Vinylchlorids mit Vinylestern von alphalischen Säuren, insbesondere von Vinylacetat; Copolymere von Vinylchlorid mit Estern der Acryl- und Methacrylsäure und mit Acrylonitril; Copolymere von Vinylchlorid mit Dien-Verbindungen und ungesättigten Dicarboxylsäuren oder deren Anhydride, wie Copolymere des Vinylchlorids mit Diethylmaleat, Diethylfumarat oder Maleinanhydrid; nachchlorierte Polymere und Copolymere des Vinylchlorids; Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobuylether usw.; Polymere des Vinylidenchlorides und Copolymere desselben mit Vinylchlorid und anderen polymerisierbaren Verbindungen; Polymere des Vinylchloracetates und Dichlorvinylethers, chlorierte Polymere des Vinylacetates, chlorierte polymerische Ester der Acryl- und alphasubstituierten Acrylsäuren; Polymere von chlorierten Styrolen, z.B. Dichlorstyrol, chlorierter Gummi, chlorierte Polymere des Chlorbutadiens und deren Copolymere mit Vinylchlorid; Gummihydrochloride und chlorierte Gummihydrochloride; sowie Mischungen genannten Polymere untereinander oder mit anderen polymerisierbaren Verbindungen und ferner die entsprechenden Bromide und Fluoride. Bevorzugt sind Polyvinylchloride.

Bei Folien, Schichtstoffen, Laminaten oder Folienverbunden kann auch eine Sperrschicht gegen Gase und Dämpfe vorgesehen werden. Geeignet sind z.B. keramische Sperrschichten, Metallfolien, Kunststoffsperrschichten oder metallische Schichten.

Sperrschichten, wie Keramikschichten, enthalten beispielsweise Oxide aus der Reihe der Siliciumoxide, der Aluminiumoxide, der Eisenoxide, der Nickeloxide, der Chromoxide oder der Bleioxide oder Gemische davon, sowie Nitride oder Oxynitride genannter Metalle und Halbmetalle. Als Keramikschichten sind die Siliciumoxide oder Aluminiumoxide zweckmässig. Die Siliciumoxide können die Formel SiOₓ, wobei x bevorzugt eine Zahl von 1 bis 2, besonders bevorzugt von 1,1 bis 1,9 und insbesondere von 1,2 bis 1,7 darstellt, aufweisen. Die Aluminiumoxide können die Formel Al_{y}O_{z}, wobei y/z z.B. eine Zahl von 0,2 bis 1,5 und bevorzugt von 0,65 bis 0,85 darstellt, aufweisen.

Die Keramikschicht wird beispielsweise durch eine Vakuumdünnschichttechnik, zweckmässig auf der Basis von Elektronenstrahlverdampfen oder Widerstandsheizen oder induktivem Heizen aus Tiegeln, z.B. auf eine Kunststoffschicht, aufgebracht. Bevorzugt ist das Elektronenstrahlverdampfen. Die beschriebenen Verfahren können reaktiv und/oder mit Ionenunterstützung gefahren werden. Die keramische Schicht kann eine Dicke von beispielsweise 5 bis 500 nm (Nanometer), zweckmässig von 10 bis 200 nm und vorzugsweise von 40 bis 150 nm, aufweisen.

Als Metallfolien, sowohl als Trägerschicht oder gegebenenfalls als Sperrschicht, können beispielsweise Folien aus Aluminium oder Aluminiumlegierungen verwendet werden.

Bevorzugt als Metallfolie wird eine Folie aus Aluminium oder Aluminiumlegierungen, wobei Aluminium einer Reinheit von z.B. 96 % und höher zweckmässig 98,6 % und höher und bevorzugt 99,6 % und höher angewendet wird. Die Aluminiumfolien sollen zweckmässig besonders flexibel, feinkörnig und/oder texturfrei sein. Die bevorzugten Aluminium-Folien sind aus Legierungen der Serien 1200.

Die Dicke der Folien aus Aluminium oder Aluminiumlegierungen beträgt z.B. 8 bis 25 µm, zweckmässig 15 bis 20 µm und bevorzugt 20 µm.

Die Sperrschicht kann auch eine metallische Schicht darstellen. Beispiel einer metallischen Schicht ist eine Eisen-, Nickel- oder Aluminiumschicht. Metallische Schichten werden in der Regel durch Sputtern, Aufdampfen oder stromlose chemische oder elektrolytische Abscheidung z.B. auf eine Trägerfolie aufgebracht.

Metallische Schichten sind beispielsweise 5 bis 500 nm (Nanometer), zweckmässig 10 bis 200 nm und vorzugsweise 40 bis 150 nm dick.

Es ist auch bevorzugt, eine Kunststoffsperrschicht, insbesondere eine Kunststoffolie mit Sperreigenschaften, allein oder bevorzugt im Verbund mit anderen Folien aus den genannten thermoplastischen Kunststoffen anzuwenden. Folien mit Sperreigenschaften sind an sich bekannt und können z.B. aus Ethylenvinylalkohol-Copolymeren, Polyvinylidenchlorid, Polyacrylnitril, z.B. BAREX, Polyacryl-Polyamid-Copolymere Sperrschicht-Copolyester, z.B. Mitsui B-010, aromatische und amorphe Polyamide, z.B. N-MXD6 der Mitsubishi Gas Chemical, bestehen oder diese Polymere enthalten und können z.B. 6 µm bis 100 µm dick sein.

Die Dicke einer einzelnen Kunststoffolie oder der einzelnen Kunststofffolien in Folienverbunden oder Laminaten kann beispielsweise bei 8 bis 500 µm, bevorzugt bei 10 bis 250 µm und insbesondere bei 12 bis 25 µm liegen.

Folienverbunde oder Laminate können die an sich bekannten Schichtaufbauten aufweisen, wie z.B. enthaltend wenigstens zwei Kunststoffschichten oder enthaltend eine Metallfolie und wenigstens eine Kunststoffschicht.

Alle Werkstoffe aus Kunststoffen können glasklar, getrübt, durchgefärbt oder farbbedeckt angewendet werden. Damit ist es möglich, z.B. opaque oder undurchsichtige Verpackungen zu gestalten.

Bei allen Ausführungsarten kann auch zumindest aussen, ein Druck oder eine bedruckte, konterbedruckte oder eingefärbte Schicht eines Materials, wie z.B. eine Kunststoffolie vorgesehen sein.

Die Siegelschichten und siegelbare Materialien sind an sich bekannt, und können beispielsweise LLDPE, LDPE, MDPE, HDPE, Polypropylen und Polylethylenterephthalat enthalten oder daraus bestehen und in Folien- oder Lackform vorliegen. Siegellacke werden z.B. in einer Dicke von 1 bis 15 µm, Siegelfolien beispielsweise in einer Dicke von 5 bis 100 µm und z.B. Polyethylen-Siegelfolien beispielsweise in einer Dicke von 5 bis 75 µm angewendet. Entsprechend können auch an sich bekannte Heissiegellacke Verwendung finden.

Die Materialien für vorliegende Verschlüsse können wenigstens einseitig und insbesondere auf der zur Behälterinnenseite gerichteten Seite mit Siegelschichten, wie Siegellacken beschichtet sein. Die Siegellacke müssen mit der obersten Schicht des Bodenteils verträglich sein. D.h. ein PVC-Bodenteil ist beispielsweise verträglich mit einem PVC-Lack, ein PP-Bodenteil soll mit einem PP-Lack verträglich sein und sinngemäss muss ein PET-Bodenteil gegen einen PET-verträglichen Siegellack gesiegelt werden können.

Die Verbunde und Laminate, wie in vorliegender Beschreibung erwähnt, können auf an sich bekannte Weise, z.B. durch Beschichten, Coextrusionsbeschichten, Kaschieren, z.B. mit Kaschierklebern und/oder Haftvermittlern oder Vorlacke, Gegenkaschieren oder Heisskalandrieren hergestellt werden. Eine Flammbehandlung oder Koronabehandlung bei der Verbundherstellung ist oft zweckmässig.

Als Haftvermittler können beispielsweise Vinylchlorid-Copolymerisate, polymerisierbare Polyester, Vinylpyridin-Polymerisate, Vinylpyridin-Polymerisate in Kombination mit Epoxidharzen, Butadien-Arylnitril-Methacrylsäure-Copolymerisate, Phenolharze, Kautschukderivate, Acrylharze, Acrylharze mit Phenol bzw. Epoxidharzen, siliciumorganische Verbindungen, wie Organosilane, modifizierte Polyolefine, wie säuremodifizierte Polyolefine oder Ethylenacrylsäure (EAA).

Bevorzugt werden EAA (Ethylenacrylsäure) oder modifizierte Polyolefine, wie z.B. modifizierte Polypropylene.

Ein bevorzugtes modifiziertes Polypropylen ist ein Addukt aus Maleinsäureanhydrid und einem Ethylen-Propylen-Copolymer. Ganz besonders bevorzugt werden Dispersionen von modifizierten Polyolefinen. Ein Beispiel einer Dispersion eines modifizierten Polypropylens ist Morprime (Markenname der Firma Morton International of Norton Norwich Products, Inc.).

Weitere geeignete Haftvermittler sind Klebstoffe wie Nitrilkautschuk-Phenolharze, Epoxide, Acrylnitril-Butadien-Kautschuk, urethanmodifizierte Acryle, Polyester-co-Polyamide, Heissschmelzpolyester, mit Heissschmelzpolyester vernetzte Polyisocyanate, polyisobutylenmodifizierte Styrol-Butadien-Kautschuke, Urethane, Ethylen-Acrylsäure-Mischpolymere und Ethylenvinylacetat-Mischpolymere.

Werden Kaschierkleber angewendet, so können die Kaschierkleber lösungsmittelhaltig oder lösungsmittelfrei und auch wasserhaltig sein. Beispiele sind lösungsmittelhaltige, lösungsmittelfreie oder wässrige Acrylatkleber oder Polyurethan-Kleber (1- oder 2-Komponenten PU-Kleber) oder Epoxidharz-Kleber. Weitere geeignete Kaschierkleber sind Ionomer-Harze, die beispielsweise unter dem Markennamen Surlyn von der Firma DuPont in den Handel gebracht werden.

Bevorzugt werden Kaschierkleber auf Polyurethan-Basis und ganz besonders bevorzugt Zweikomponenten-Polyurethan-Kleber.

Der Haftvermittler kann beispielsweise in Mengen von 0,1 bis 10 g/m², zweckmässig in Mengen von 0,8 bis 6 g/m² und bevorzugt in Mengen von 2 bis 6 g/m² angewendet werden.

Der Kaschierkleber kann beispielsweise in Mengen von 1 bis 10 g/m² vorzugsweise in Mengen von 2 bis 8 g/m² und insbesondere in Mengen von 3 bis 6 g/m² angewendet werden.

Enthält die Trägerschicht Papier, so können damit Papiere mit z.B. 40 bis 100 g/m² Flächengewicht angewendet werden, ferner Kraftpapiere, Karton, Wellkarton mit Flächengewichten von z.B. 140 - 500 g/m², Pappen mit Flächengewichten von z.B. mehr als 225 g/m², Kreppapiere, Seidenpapiere, Pergamentpapier, Pergamentersatz, Pergamin, imprägnierte Papiere und synthetische Papiere.

Als Schaumstoffe aus organischen Materialien können beispielweise Polyolefinschäume, wie Polyethylenschäume mit einer Dichte von 100 bis 600 kg/m³, Polypropylenschäume, PVC-Schäume, Polyurethanschäume oder Styrolschäume angewendet werden. Die Dicke der Schäume kann beispielsweise von 0,5 bis 5 mm betragen.

Die erste Haftschicht kann beispielsweise ein Lack in einer Menge von 0,5 bis 3 g/m² darstellen.

Geeignete Lacke für die erste Haftschicht sind beispielsweise Lacke auf Basis von PVC. Beispiele hierfür sind Copolymerisate aus Vinylchlorid, Vinylacetat und Maleinsäure oder Copolymerisate aus Vinylchlorid und Vinylacetat. Diese Lacke können gegebenenfalls noch Weichmacher und weiterhin übliche Zusatzstoffe, wie Gleitmittel und Verlaufmittel, enthalten.

Der Anteil Vinylacetat bestimmt die Verträglichkeit mit Cellulosenitrat im Sinne gegenseitiger Mischbarkeit in geeigneten Lösemitteln oder die Haftfestigkeit von Cellulosenitratlacken auf dem PVC-Lackfilm. Anstelle von Vinylacetat können auch Acrylsäureester oder Maleinsäureester Verwendung finden.

Der Gehalt an mit Cellulosenitrat verträglichen Komponenten darf im PVC-Lackfilm zusammen 20 Gew.-% nicht übersteigen. Damit sind der Vinylacetat (Acrylsäureester, Maleinsäureester)-Anteil, aber auch sonstige Lackbestandteile, wie z.B. mit Cellulosenitrat verträgliche Weichmacher gemeint. Ein höherer Anteil dieser Komponenten bewirkt in der Regel eine zu grosse Haftung von Cellulosenitrat-Lackfilmen auf dem PVC-Lackfilm.

Die zweite Haftschicht kann beispielsweise ein Lack in einer Menge von 0,5 bis 3 g/m² darstellen.

Geeignete Lacke für die zweite Haftschicht sind z.B Cellulosenitratlacke (CN-Lacke) auf Basis ester- oder alkohollöslicher Collodiumwollen der Viskositätslagen 15 bis 33 E bzw. 15 bis 30 A nach DIN 53179.

Zur Erreichung der gewünschten Haftkraft auf dem PVC-Lackfilm beträgt der Cellulosenitratanteil des CN-Lackes zweckmässig mindestens 70 % seines Festkörpers. Die restlichen Festbestandteile setzen sich z.B. aus Weichmachern, Weich- und/oder Hartharzen sowie den üblichen Lackhilfsmitteln zusammen.

Die erste Haftschicht kann auch eine thermoplastische Polyesterbeschichtung darstellen und die zweite Haftschicht kann eine wärmehärtbare Polyesterbeschichtung darstellen. Die thermoplastische Polyesterbeschichtung kann als Heisschmelze auf die z.B. erste Trägerschicht aufextrudiert werden, während der wärmehärtbare Polyester mittels eines Druckverfahrens, wie z.B. eines Flexodruckverfahrens bei erhöhten Temperaturen auf die zweite Trägerschicht aufgebracht werden kann.

Die bevorzugte Dicke der beiden Polyesterbeschichtungen kann mit jeweils 20 bis 50 µm angegeben werden. Als Polyester werden vorzugsweise jeweils Polyethylenterephthalate eingesetzt.

Die erste und die zweite Haftschicht können bezüglich ihrer Anordnung im Verbund auch gegenseitig ausgetauscht werden.

Bevorzugte Sicherheits- oder Originalitätsverschlüsse nach vorliegender Erfindung können beispielsweise einen Aufbau aufweisen, enthaltend:
a) ein Papier mit einem Flächengewicht von 40 - 100 g/m², vorzugsweise 50 g/m²,
b) ein Kaschierkleber in Mengen von 2,0 bis 6,0 g/m²,
c) eine Polyesterfolie in einer Dicke von 10 bis 25 µm, vorzugsweise 12 µm,
d) ein Kaschierkleber in Mengen von 2,0 bis 6,0 g/m²,
e) eine erste Haftschicht, vorzugsweise ein Lack aus der Reihe der Cellulosenitratlacke, in einer Menge von 0,5 bis 3,0 g/m²,
f) eine zweite Haftschicht, vorzugsweise ein Lack aus der Reihe der PVC-Lacke, in einer Menge von 0,5 bis 3,0 g/m²,
g) eine Aluminiumfolie in einer Dicke von 15 bis 30 µm, vorzugsweise 20 µm,
h) einen siegelbaren Thermolack in Mengen von 1 bis 10 g/m².

Die Schicht a) kann auf ihrer Aussenseite mit einem Druck versehen sein.

Beispielsweise kann ein derartiger Verbund als Verschluss für Kunststoff-Blisterunterteile vorgesehen werden. Der obengenannte Verbund für die Sicherheits- und Originalitätsverschlüsse kann beispielsweise als Rollenware, in Form von Bögen oder als Stanzlinge vorbereitet werden. Die Verschlüsse werden auf ein befülltes Unterteil, beispielsweise ein Kunststoff-Blisterunterteil, über die Thermolackschicht h) aufgesiegelt. Entsprechend den Unterteilen und der Anordnung der einzelnen Vertiefungen für den Packungsinhalt kann das Verbundmaterial, vor oder nach dem Siegeln auf das Kunststoff-Blisterunterteil, mit Trennlinien, Schwächungslinien oder Perforationen versehen werden. Damit gelingt es, für jede einzelne Vertiefung ein einzelnes Deckelsegment zu schaffen. Das Deckelsegment kann eine Aufreisshilfe in Form einer Lasche aufweisen, welche am Rand der Blisterpackung übersteht oder welche innerhalb der äusseren Begrenzung der Blisterpackung angeordnet ist, jedoch derart leicht absteht, dass sie leicht gegriffen werden kann. Beispielsweise können solche innerhalb der Begrenzung befindlichen Laschen dadurch erzeugt werden, dass an einzelnen randständigen Stellen die Siegelung zwischen dem Kunststoff-Blisterunterteil und dem Verschlussmaterial nicht vollzogen wird. Dies kann durch eine entsprechende Ausgestaltung des Siegelwerkzeuges geschehen.

Eine derart ausgestaltete Kunststoff-Blisterverpackung kann beispielsweise durch das an sich übliche einfache Durchstossen durch Druck vom Bodenteil her auf die Tablette durch den Deckel hindurch, wobei die Aluminiummembrane aufplatzt, nicht geöffnet werden.

Gemäss vorliegendem Beispiel ist über der Aluminiumfolie g) die flexible Polyesterfolie c) angebracht, welche sich verformt und nicht reisst. Greift man jedoch die Aufreisshilfe, so wird die erste Trägerschicht aus Papier a), Kaschierkleber b), Polyesterfolie c), Kaschierkleber d) und der ersten Haftschicht e) leicht entfernt. Da die erste Haftschicht e) und die zweite Haftschicht f) nur aneinander haften und nicht kleben, muss kein Kohäsionsbruch erzeugt werden. Das Entfernen der ersten Trägerschicht geht also leicht und ohne grossen Kraftaufwand vonstatten. Nunmehr bietet sich die Kunststoff-Blisterverpackung wie eine mit einem Aluminiumfoliendeckel versehene Verpackung an, d.h. eine zu entnehmende Tablette kann durch Fingerdruck auf den Bodenteil durch die verbleibende zweite Trägerschicht, nämlich der Aluminiumfolie g), mit der zweiten Haftschicht f) und dem Thermolack h), durchgestossen werden.

Eine weitere bevorzugte Ausführungsform vorliegender Sicherheits- oder Originalitätsverschlüsse liegt in einem Mehrschichtsverbund, enthaltend
a) einen Karton eines Flächengewichtes von 225 bis 500 g/m², vorzugsweise 430 g/m², einen Wellkarton oder einen Polyolefinschaum, insbesondere einen Polyethylenschaum,
b) Aluminiumfolie einer Dicke von 8 bis 20 µm, vorzugsweise 9 µm,
c) ein Kaschierkleber in einer Menge von 2,0 bis 6,0 g/m²,
d) eine erste Haftschicht eines Lackes aus der Reihe der PVC-Lacke, z.B. in einer Menge von 0,5 bis 3,0 g/m²,
e) eine zweite Haftschicht eines Lackes aus der Reihe der Cellulosenitratlacke, z.B. in einer Menge von 0,5 bis 3,0 g/m²,
f) eine Aluminiumfolie in einer Dicke von 8 bis 20 µm, vorzugsweise von 9 µm,
g) eine Pergaminschicht mit einem Quadratmetergewicht von 30 bis 50 g/m², vorzugsweise 40 g/m².

Alternativ kann auch
f) eine Aluminiumfolie in einer Dicke von 20 bis 40 µm und
g) eine Schicht eines Ionomerharzes, beispielsweise in einer Dicke von 1 bis 20 µm, vorzugsweise einer Surlynschicht, sein,

oder in anderer alternativer Ausführungsform kann
g) eine Wachsschicht in einer Menge von 5 bis 15 g/m², vorzugsweise 9 g/m² und
h) eine Pergaminschicht mit einem Quadratmetergewicht von 30 bis 50 g/m², vorzugsweise 40 g/m², sein.

Als Wachsschichten sind beispielsweise Kaschierwachsschichten und als Wachse z.B. Paraffinwachse oder Polyolefinwachse geeignet.

Aus diesem Verbund können beispielsweise Rollen oder Bögen und daraus wiederum Stanzlinge hergestellt werden. Stanzlinge können z.B. eine runde Form aufweisen und als Verschlüsse für beispielsweise Glasbehälter angewendet werden. Die runde Öffnung von solchen Glasbehältern wird in ihrem Rand- oder Schulterbereich beispielsweise mit einer Klebemasse, wie einem Kleister, vorzugsweise einem Stärkekleister, beschichtet und der runde Stanzling auf die Öffnung gebracht. Der Kleister verbindet den Stanzling randständig dichtend mit dem Behälter. Ein derart verschlossener Behälter kann zusätzlich mit einem Schraub- oder Schnappdeckel überschlossen werden. Wird eine derart verschlossene Verpackung geöffnet, beispielsweise durch Öffnen des Schraub- oder Schnappverschlusses, oder falls ein solcher Schraub- oder Schnappverschluss nicht vorgesehen ist, durch Öffnen mittels einer Aufziehhilfe, wie einer Lasche, so trennt sich der Verbund zwischen der ersten und zweiten Haftschicht leicht und ohne Zerstörung oder ohne Kohäsionsbruch einer Schicht. Auf dem Behälter bleibt die Trägerschicht im wesentlichen aus dem Pergamin g), resp. Ionomerharz g), resp. Wachs g) und Pergamin h), der Aluminiumfolie f) und der zweiten Haftschicht e) zurück. Damit man an den Inhalt des Behälters gelangt, kann die Trägerschicht entlang dem Kleisterrand oder durch Durchstossen der Trägerschicht geöffnet und gegebenenfalls vollständig entfernt werden. Zum Wiederverschliessen des Behälters wird dann zweckmässig der Schraub- oder Schnappverschlussdeckel angewendet. Ein solcher Schraub- oder Schnappverschlussdeckel kann aus einem Kunststoff- oder Metalldeckel bestehen. Nach dem erstmaligen Öffnen des Behälters über den Schraub- oder Schnappverschlussdeckel löst sich die erste von der zweiten Haftschicht und währenddem die erste Trägerschicht am Behälter haften bleibt, verbleibt die zweite Trägerschicht mit den Schichten a) bis d) im Schraub- oder Schnappverschlussdeckel. Beim Wiederverschliessen eines solchen Behälters über den Schraub- oder Schnappverschlussdeckel ist dann die erste Haftschicht gegen die Behälteröffnung gerichtet und stützt sich auf der Schulter des Behälters ab. Wird ein flexibles Schaummaterial oder Wellkarton bzw. Karton als Teil der zweiten Trägerschicht verwendet, wird dieses Material durch den Schraub- oder Schnappverschlussdeckel beim Wiederverschliessen komprimiert. Dadurch schliesst nach dem zweiten oder weiteren Öffnungsvorgängen diese zweite Trägerschicht den Behälter ab.

Die Sicherheits- oder Originalitätsverschlüsse für Entnahmeöffnungen von Verpackungen gemäss vorliegender Erfindung können beispielsweise derart hergestellt werden, dass eine erste Trägerschicht und darauf angebracht eine erste Haftschicht erzeugt wird, anschliessend kann die zweite Haftschicht und die zweite Trägerschicht aufgebracht werden.

Vorliegende Erfindung betrifft auch Verpackungsbehälter mit einem Sicherheits- oder Originalitätsverschluss.

Solche Behälter können beispielsweise Formpackungen oder sogenannte Kunststoff-Blisterunterteile sein. Diese Unterteile werden in der Regel aus Kunststoffen oder Kunststoffverbunden durch Tiefziehen, Tiefen, Giessen und dergleichen hergestellt, oder es können Behälter in beliebiger, d.h. runder oder eckiger Form, z.B. Becher, Gläser oder Flaschen, sein. Die Wahl des Behältermaterials ist freibleibend und kann Kunststoffe, Metalle, Glas oder Kombinationen davon umfassen. Vorliegende Sicherheits- oder Originalitätsverschlüsse weisen erfindungsgemäss z.B. zwei Trägerschichten oder Substrate auf, die mittels Kaschierung in Form von Haftschichten verbunden werden. Die Verbundhaftung der Kaschierung liegt auf einem niedrigen und konstanten Niveau, so dass die beiden Trägerschichten über die Kaschierung wieder voneinander gelöst werden können. Die Trennung der beiden kaschierten Substrate oder Trägerschichten erfolgt somit nicht in der Kaschierung sondern zwischen den beiden beschriebenen, aneinander angrenzenden Haftschichten, z.B. Lackschichten. Die Haftung zwischen den beiden Haftschichten, resp. Lackschichten, ist so hoch, dass übliche Beanspruchungen bei der Herstellung und Verarbeitung überstanden werden. Andererseits ist eine Trennung im gewünschten Sinn, d.h. insbesondere ohne einen Kohäsionsbruch, in einer der Schichten zwischen den beiden Haftschichten möglich.

Der Vorteil der erfinderischen Lösung liegt beispielsweise in einer geringen Temperaturempfindlichkeit oder weitgehenden Temperaturunempfindlichkeit des Systems und einer Erzielung von konstanten und reproduzierbaren Haftungswerten zwischen zwei Schichten, resp. Trägerschichten, resp. Substraten. Gerade die bis anhin in der Praxis zur Anwendung gelangenden Kaschierungen von zwei zu trennenden Substraten mittels Punkt-Wachskaschierung haben den Nachteil einer starken Temperaturempfindlichkeit. Auch ermöglicht die Punkt-Wachskaschierung keine weitere Verarbeitung mittels Hochfrequenzverschweissung, wie sie in verschiedenen Verpackungsbereichen zur Anwendung gelangen kann.

## Patentansprüche

1. Sicherheits- oder Originalitätsverschluss für Entnahmeöffnungen von Verpackungen in Form eines Mehrschichtverbundes, enthaltend eine erste Haftschicht und eine zweite Haftschicht, wobei die erste und die zweite Haftschicht aneinanderliegen.

2. Sicherheits- oder Originalitätsverschluss nach Anspruch 1, enthaltend eine erste Trägerschicht und auf der ersten Trägerschicht eine erste Haftschicht und anliegend an die erste Haftschicht eine zweite Haftschicht.

3. Sicherheits- oder Originalitätsverschluss nach Anspruch 1, enthaltend eine erste Trägerschicht, auf der ersten Trägerschicht eine erste Haftschicht, anliegend an die erste Haftschicht eine zweite Haftschicht und auf der zweiten Haftschicht eine zweite Trägerschicht.

4. Sicherheits- oder Originalitätsverschluss nach Anspruch 1, dadurch gekennzeichnet, dass die erste Haftschicht und die zweite Haftschicht vollflächig aneinander anliegen.

5. Sicherheits- oder Originalitätsverschluss nach Anspruch 1, enthaltend
a) ein Papier mit einem Flächengewicht von 40 bis 100 g/m², vorzugsweise 50 g/m²,
b) ein Kaschierkleber in Mengen von 2,0 bis 6,0 g/m²,
c) eine Polyesterfolie in einer Dicke von 10 bis 25 µm, vorzugsweise 12 µm,
d) ein Kaschierkleber in Mengen von 2,0 bis 6,0 g/m²,
e) eine erste Haftschicht, vorzugsweise ein Lack aus der Reihe der Cellulosenitratlacke, in einer Menge von 0,5 bis 6,0 g/m²,
f) eine zweite Haftschicht, vorzugsweise aus der Reihe der PVC-Lacke in einer Menge von 0,5 bis 3,0 g/m²,
g) eine Aluminiumfolie in einer Dicke von 15 bis 30 µm, vorzugsweise 20 µm,
h) einen siegelbaren Thermolack in Mengen von 1 bis 10 g/m².

6. Sicherheits- oder Originalitätsverschluss nach Anspruch 1, enthaltend
a) einen Karton eines Flächengewichtes von 225 bis 500 g/m², vorzugsweise 430 g/m², einen Wellkarton oder einen Polyolefinschaum, insbesondere einen Polyethylenschaum,
b) Aluminiumfolie einer Dicke von 8 bis 20 µm, vorzugsweise 9 µm,
c) ein Kaschierkleber in einer Menge von 2,0 bis 6,0 g/m²,
d) eine erste Haftschicht, vorzugsweise ein Lack aus der Reihe der PVC-Lacke, in einer Menge von 0,5 bis 3,0 g/m²,
e) eine zweiten Haftschicht, vorzugsweise ein Lack aus der Reihe der Cellulosenitratlacke, in einer Menge von 0,5 bis 3,0 g/m²,
f) eine Aluminiumfolie in einer Dicke von 8 bis 20 µm, vorzugsweise von 9 µm,
g) eine Pergaminschicht mit einem Quadratmetergewicht von 30 bis 50 g/m², vorzugsweise 40 g/m².

7. Sicherheits- oder Originalitätsverschluss nach Anspruch 1, enthaltend
a) einen Karton eines Flächengewichtes von 225 bis 500 g/m², vorzugsweise 430 g/m², einen Wellkarton oder einen Polyolefinschaum, insbesondere einen Polyethylenschaum,
b) Aluminiumfolie einer Dicke von 8 bis 20 µm, vorzugsweise 9 µm,
c) ein Kaschierkleber in einer Menge von 2,0 bis 6,0 g/m²,
d) eine erste Haftschicht, vorzugsweise ein Lack aus der Reihe der PVC-Lacke, in einer Menge von 0,5 bis 3,0 g/m²,
e) eine zweiten Haftschicht, vorzugsweise ein Lack aus der Reihe der Cellulosenitratlacke, in einer Menge von 0,5 bis 3,0 g/m²,
f) eine Aluminiumfolie in einer Dicke von 8 bis 20 µm, vorzugsweise von 9 µm,
g) eine Wachsschicht in einer Menge von 5 bis 15 g/m², vorzugsweise 9 g/m², und
h) eine Pergaminschicht mit einem Quadratmetergewicht von 30 bis 50 g/m², vorzugsweise 40 g/m².

8. Sicherheits- oder Originalitätsverschluss nach Anspruch 1, enthaltend als eine erste Haftschicht einen Lack auf Polyvinylchlorid-Basis und als zweite Haftschicht einen Lack auf Cellulosenitratbasis oder enthaltend als erste Haftschicht eine Schicht eines thermoplastischen Polyesters und als zweite Haftschicht einen wärmevernetzbaren Polyester.

9. Verpackungsbehälter mit einer Entnahmeöffnung, die mit einem Sicherheits- oder Originalitätsverschluss nach Anspruch 1 verschlossen ist.
